# EUROPEAN PATENT APPLICATION

(11) **EP 4 365 668 A1**
(43) Date of publication of application: **08.05.2024**
(21) Application number: 22205598.0
(22) Date of filing: 04.11.2022
(51) Int. Cl.: G02C 7/02

(54) **SPECTACLE LENS WITH NON-CONCENTRIC MICROSTRUCTURES**

(71) Applicant: Carl Zeiss Vision International GmbH, 73430 Aalen (DE)
(72) Inventor: Jester, Philipp, 89520 Heidenheim (DE)
(74) Representative: Carl Zeiss AG - Patentabteilung

(57) **Abstract**

A data set stored on a computer-readable medium or being embodied in the form of a computer-readable data signal comprising a digital twin of a spectacle lens (300) being configured for the purpose of use for manufacturing said spectacle lens (300), said spectacle lens (300) comprising:
- a clear vision zone (309);
- a plurality of compact defocusing structures (312).

The plurality of compact defocusing structures (312) being arranged along a structure line (305) without any point and axis symmetry and corresponding to a predefined contour line along which a visual performance indicator has a constant value, said visual performance indicator characterizing a visual performance of said spectacle lens (300) within said clear vision zone (309) for said wearer wearing said spectacle lens (300). Alternatively, plurality of compact defocusing structures (312) being arranged along a structure line (305) having a predefined constant distance to said predefined contour line along which a visual performance indicator has a constant value.

## Description

### Field of invention

The present invention relates to a data set comprising a) data describing a digital twin of a spectacle lens being configured for the purpose of use for manufacturing said spectacle lens or b) data containing computer-readable instructions for controlling one or more manufacturing machines to manufacture a spectacle lens according to the preamble of claim 1, a method being configured for a computer-implemented calculation of a digital twin of a spectacle lens according to the preamble of claim 10 and a kit comprising (a) a spectacle lens and (b) information comprising a predefined position of wear according to the preamble of claim 13.

### Related Art

WO 2010/075319 A2 refers to the importance of peripheral retinal image determining myopic eye growth. The document proposes a therapeutic treatment method for preventing, ameliorating, or reversing eye-length related disorders. The therapeutic treatment method comprises the following steps: identifying, in a patient, an eye-length-related disorder; and inducing artificial blurring of the patient's peripheral vision in order to decrease an average spatial frequency of images input to the retina of the eye past a threshold spatial frequency to inhibit further lengthening of the patient's eye. In particular, the document proposes providing the patient with spectacle lenses having a zone including a plurality of elements selected from the group consisting of: (i) bumps on a surface of the spectacle lens; (ii) depressions on the surface of the spectacle lens; (iii) first translucent inclusions in a spectacle lens material; and (iv) first transparent inclusions in the spectacle lens material, whereby the first transparent inclusions having a refractive index different from that of the spectacle lens material. The elements in general are point-shaped elements having a non-zero-point density in a range between 0 and 8 dots per mm². The spectacle lens has another zone that is surrounded by the zone including said plurality of elements and that provides clear vision.

WO 2018/026697 A1 discloses spectacles comprising a frame and a pair of spectacle lenses mounted in the frame. The spectacle lenses comprising a point pattern distributed across each spectacle lens. The point pattern comprises an array of dots spaced apart by a distance of 1 mm or less. Each point has a maximum dimension of 0.3 mm or less.

WO 2019/152438 A1 discloses a spectacle lens comprising a lens material having two opposing curved surfaces and a scattering region surrounding a clear aperture. The scattering region has a plurality of spaced apart scattering centers sized and shaped to scatter incident light. The scattering centers being are arranged in a pattern that includes an irregular variation in spacing between adjacent scattering centers and/or an irregular variation in scattering centers size.

Myopia-reducing spectacles such as they are for example disclosed in WO 2019/152438 A1 are composed of a spectacle frame and spectacle lenses mounted in the spectacle frame. Generally, the spectacle lenses can be piano lenses, single vision lenses (e.g., with positive or negative power) or multivision lenses (e.g., bifocals or progressive lenses). The spectacle lenses each have a clear vision zone surrounded by a zone providing a reduced contrast. The clear vision zones are positioned to coincide with the wearer's on-axis viewing position, while the zones providing the reduced contrast correspond to the wearer's peripheral vision. The zones providing the reduced contrast are composed of an array of dots which reduce the contrast of an object in the wearer's peripheral vision by scattering light passing through those zones to the wearer's eye. In general, dots can be provided by forming protrusions and/or recesses on one or both surfaces of a spectacle lens and/or by forming scattering inclusions in the lens material itself in these zones.

Some wearers of spectacle lenses having a central clear vision zone surrounded by a zone providing a reduced contrast as disclosed in WO 2019/152438 A1 or by a zone with microlenses/lenslets as disclosed in WO 2019/206569 A1 report of some kind of discomfort in use.

Hong Kong Polytechnic University and Hoya disclosed spectacle lenses of similar structure in US 2017/131567 A1, namely those having bumps on a surface of the spectacle lens. These spectacle lenses are known as MSMD (multi segment myopic defocus) lenses. The respective technical concept is known as D.I.M.S. (Defocus Incorporated Multiple Segments) technology. Details are, for example, disclosed under https://www.hoyavision.com/en-hk/discover-products/for-spectacle-wearers/special-lenses/myosmart/. Embodiments of these spectacle lenses shall suppress the progress of myopia while correcting myopia. A spectacle lens of such an embodiment shown in US 2017/131567 A1 is a meniscus concave lens with a front surface formed as a convex curved surface that is curved toward an object side and a back surface formed into a concave surface having a larger curvature than the curvature of the front surface. In addition, the spectacle lens has a first zone in the center of the spectacle lens. The first zone has a first refractive power based on a prescription for correcting myopia and a second zone that surrounds the first zone and includes a plurality of respectively independent island-shaped areas.

The front surface of each of the island-shaped areas in the second zone is formed into a convex spherical surface shape toward the object side having a larger curvature than the curvature of the front surface of the first zone. Thus, the refractive power of the independent island-shaped areas in the second zone is larger than the refractive power of the first zone by 2.00 D to 5.00 D. Accordingly, an image being focused on a retina of an eye by the first zone is focused on a point in front of the retina by the island-shaped areas in the second zone.

Each island-shaped area covers about 0.50 to 3.14 mm2 of the spectacle lens and has a circular shape having a diameter of about 0.8 to 2.0 mm. The plurality of island-shaped areas is approximately evenly arranged in the vicinity of the first zone in a way to be separated from each other by a distance almost equal to a value of a radius of an of island-shaped area.

A similar approach is used in Essilor's Stellest spectacle lenses being described in detail in EP 3 553 594 A1, EP 3 561 578 A1, WO 2019/166653 A1, WO 2019/166654 A1, WO 2019/166655 A1, WO 2019/166657 A1, WO 2019/166659 A1 and WO 2019/206569 A1, respectively. The spectacle lenses described therein comprise microlenses/lenslets which are aspherical and have an optical power in their geometric center which lies in the range between 2.0 D and 7.0 D in absolute value, and an optical power in their periphery which lies in the range between 1.5 D and 6.0 D in absolute value. The refractive optical power provided by the aspherical microlenses/lenslets exceeds the refractive power of a clear central zone of the spectacle lenses by 0.5 D or more.

WO 2020/014613 A1 discloses a myopia control spectacle lens that may contain one or more defocus elements. A myopia control spectacle lens described therein may contain a clear center zone, free of said defocus elements. Exemplarily, the document refers to regions that comprise island-shaped lenses.

CN215006124 U, the closest prior art on which the current invention is based, discloses an asymmetric multi-point peripheral myopia out-of-focus glasses lens for controlling the myopia of teenagers, which aims to solve the problem that the refractive error is further deepened due to uncomfortable vision after the existing myopia out-of-focus glasses lens for controlling the myopia of the teenagers is worn. The rear surface of the lens is an aspheric surface or a super ring surface. The lens is characterized in that the lens comprises a central bright vision area and a peripheral myopia defocus area; the central vision area is positioned in the middle of the lens, is used for correcting myopia, and is asymmetrically distributed in an inclined T-shape around the geometric center of the lens; the peripheral myopia defocus area of the lens is located on the periphery of the central photopic vision area. The central bright vision area obliquely extends to be T-shaped, so that sudden change of an optical image in the watching area when teenagers read at a short distance can be effectively reduced.

The spectacle lenses of this kind have the drawback that, either a small central clear vision zone with a high myopia control function zone in the periphery is realized, which results in a high level of discomfort for the wearer, or a large central clear vision zone with a small myopia control function zone in the periphery is realized, which results in a small level of myopia control function.

### Problem to be solved

It is therefore a problem of the present invention in view of CN215006124 U, to provide a data set comprising a) data describing a digital twin of a spectacle lens or b) data containing computer-readable instructions, a method being configured for a computer-implemented calculation of a digital twin of a spectacle lens and a kit comprising (a) a spectacle lens and (b) information comprising a predefined position of wear for optimization of the position of myopia retarding structures on a spectacle lens in order to achieve a well-balanced myopia control function. In particular, the problem to be solved is to provide a spectacle lens which avoids zones providing discomfort to the wearer without providing a myopia retarding effect.

### Summary of the invention

This problem is solved, in case of a data set comprising a) data describing a digital twin of a spectacle lens or b) data containing computer-readable instructions, by the features of the characterizing portion of claim 1.

In case of the method being configured for a computer-implemented calculation of a digital twin of a spectacle lens, the above-mentioned problem is solved by the features of the characterizing portion of claim 10.

This problem is solved, in case of the kit comprising (a) a spectacle lens and (b) information comprising a predefined position of wear, by the features of the characterizing portion of claim 13.

Advantageous embodiments and developments of the invention are the subject matter of the dependent claims.

The first aspect of the present invention as outlined in the foregoing relates to a data set stored on a computer-readable medium or being embodied in the form of a computer-readable data signal comprising at least one kind of the following kinds of data:
a. a digital twin of a spectacle lens being configured for manufacturing said spectacle lens, or
b. data containing computer-readable instructions for controlling one or more manufacturing machines to manufacture said spectacle lens.

The spectacle lens being configured for positioning in a predefined position of wear according to sec. 3.2.36 of ISO 13666:2019(E) in front of an eye of a predefined wearer, said spectacle lens comprising:
- a clear vision zone,
- at least one of the group consisting of
   (i) one elongated defocusing structure
   (ii) a plurality of compact defocusing structures
   (iii) one elongated diffusing structure and
   (iv) a plurality of compact diffusing structures.

The inventive data set is characterized in that the (i) one elongated defocusing structure and/or said (ii) plurality of compact defocusing structures and/or said (iii) elongated diffusing structure and/or said (iv) plurality of diffusing structures being arranged along a structure line without any point and axis symmetry. Moreover, the structure line corresponds to a predefined contour line, along which a visual performance indicator has a constant value. The visual performance indicator characterizes a visual performance of the spectacle lens within the clear vision zone for the wearer wearing the spectacle lens in the predefined position of wear in front of the eye. Alternatively, the structures are arranged along a structure line having a predefined constant distance to the predefined contour line along which a visual performance indicator has a constant value.

The term "data set" describes in context of the present invention an item, such as a numeric or an alphanumeric item, which comprises at least one piece of information. The data set may be provided in computer readable form, such as a computer readable medium or a computer-readable data signal.

The term "computer-readable medium" refers to a medium capable of storing data in a format readable by a computer device.

The term "digital twin of a spectacle lens" refers to a digital representation of a spectacle lens and is a product of the design or calculating process of the spectacle lens. In other words, if a lens designer finishes the design or the calculation process of the spectacle lens, the data set of a spectacle lens is the result of said design or calculating process. Said data set is configured for the purpose of use for manufacturing a spectacle lens. In other words, a manufacturer for spectacle lenses uses said data set for producing a physical spectacle lens.

As generally used, the term "spectacle lens" refers to an ophthalmic lens worn in front of, but not in contact with, the eyeball (DIN ISO 13666:2019, section 3.5.2), where an ophthalmic lens is a lens intended to be used for purposes of measurement, correction and/or protection of the eye, or for changing its appearance (DIN ISO 10 13666:2019, section 3.5.1).

The term "position of wear" refers to the position, including orientation, of the spectacle lenses relative to the eyes and face during wear (DIN ISO 13666:2019, section 3.2.36). The position of wear is determined by the pantoscopic angle, the face form angle and the vertex distance.

The term "pantoscopic angle" is the vertical angle between the horizontal and the perpendicular to a reference line passing through the apex of the grooves of the upper and lower rims of the frame in the vertical plane containing the primary direction (DIN ISO 13666:2019, section 3.2.37), where the primary direction is the direction of the line of sight, usually taken to be the horizontal, to an object at an infinite distance measured with habitual head and body posture when looking straight ahead in unaided vision (DIN ISO 13666:2019, section 3.2.25) and the line of sight is the ray path from the point of interest (i.e. point of fixation) in object space to the centre of the entrance pupil of the eye and its continuation in image space from the centre of the exit pupil to the retinal point of fixation (generally the foveola) (DIN ISO 13666:2019, section 3.2.24). Typical values of the as-worn pantoscopic angle lie in the range between -20 and +30 degree.

The term "face form angle" is the horizontal angle between the primary direction and the perpendicular to a reference line passing through the apex of the grooves of the nasal and temporal rims of the frame in the horizontal plane containing the primary direction (DIN ISO 13666:2019, section 3.2.38). Typical values of the face form angle lie in the range between -5 and +30 degree.

The term "vertex distance" is the horizontal distance between the back surface of the spectacle lens and the apex of the cornea, measured with the eyes in the primary position (DIN ISO 13666:2019, section 3.2.40), where the primary position is the position of the eye when looking in the primary direction (DIN ISO 13666:2019, section 3.2.26). Typical valued of the vertex distance lie in the range between 5 mm and 30 mm.

In the present invention, the term "zone" is used in the context of a spectacle lens to denominate a portion of the spectacle lens which represents an area of the spectacle lens which is smaller than the total area of the spectacle lens.

The term "clear vision zone" refers in the context of the present invention to a zone of a spectacle lens that is configured to provide clear vision to the wearer. Furthermore, a clear vision zone is designed for achieving, if necessary, assisted by accommodation, a focused image on the fovea of the wearer's eye. The term "fovea" refers to the fovea centralis, which is a central pit of the retina with densely packed photoreceptor cells. The clear vision zone represents an area having a focal power that is preferably based on a prescription for correcting an abnormal refraction of an eye. The clear vision zone shall provide neither a myopic defocus nor a diffusion in foveal vision.

The term "defocusing structure" applies to a structure providing a focal power exceeding a focal power of the clear vision zone of the spectacle lens. Typically, the focal power of the defocusing structure exceeds the focal power of the clear vision zone by more than 0.25 D, preferably by more than 0.5 D.

Such a "defocusing structure" or such "defocusing structures" according to the invention are arranged along a so-called "structure line". Each defocusing structure has a spatial extent along said structure line and a spatial extent transverse to said structure line.

The present invention distinguishes between an "elongated defocusing structure" and a "compact defocusing structure". The term "elongated" is used for a "defocusing structure" the spatial extent along said structure line exceeds the spatial extent transverse to said structure line by at least 2. Preferably, the spatial extent along said structure line of an elongated defocusing structure exceeds the spatial extent transverse to said structure line by more than 10. Typically, the spatial extent of an elongated defocusing structure covers the complete structure line.

Typically, the spatial extent of such an elongated defocusing structure in transverse direction to said structure line is between 2 mm and 7 mm. Preferably, the spatial extent transverse to said structure line is between 3 mm and 6 mm.

With particular regard to the present invention, such elongated defocusing structure may comprise an ellipsoidal shaped or a cylindric shaped cross-section. Moreover, a defocusing structure may comprise a concentric or a non-concentric cross-sectional shape. In case of the ellipsoidal structure, the structure comprises two different axis, a semi-major axis and a semi-minor axis. In case of the cylindric cross-sectional shaped structure, the structure comprises a base comprising a circle with a radius (first geometrical dimension) and a length (second geometrical dimension) transverse to the structure line. Typical elongated focusing structures are those disclosed e.g. in US 2012062836 A1, CN 111103701 B and especially shown in Figures 14a and 14b in EP 3561578 A1, but arranged along a circular line instead of being arranged along a structure line as defined according to the invention.

The term "one elongated defocusing structure" refers to at least one elongated defocusing structure. In other words, the term "one elongated defocusing structure" refers to one or more elongated defocusing structures.

The term "compact" is used for a "defocusing structure" the spatial extent along said structure line of which is substantially equal to the spatial extent transverse to said structure line. Substantially equal means that the spatial extent along said structure line differs from the spatial extent transverse to said structure line by less than 2.

The term "plurality of compact defocusing structures" refers to a plurality of structures providing a focal power exceeding the focal power of the clear vision zone of the spectacle lens. With particular regard to the present invention, such compact defocusing structures may comprise island-shaped areas as described e.g. in US 2017/131567 A1, microlenses as described e.g. in US 11073704 A and EP3283008 A1, lenslets as described e.g. in Fig. 6b of WO 2020/014613 A1 or refracting bumps or transparent areas having a different refractive index as compared to the surrounding spectacle lens material as described e.g. in WO 2010/075319 A2.

Typically, the spatial extent of such a compact defocusing structure is between 2 mm and 7 mm. Preferably, the spatial extent transverse to said structure line is between 3 mm and 6 mm. The maximum geometrical dimension of a compact structure within this invention preferably equals to 9 mm. The maximum distance between at least two compact structure is preferably equal to 15.7 mm. The distance between at least two compact structures is measured from the center of gravity of each compact structure.

The overlapping microlens structures shown in Fig. 1 of WO 2019/206569 A1 may be seen as a combination of "compact" and "elongated" defocusing structures.

Said plurality of defocusing structures comprise more than one defocusing structure of the type described in the foregoing. whereas the plurality of defocusing structures form a non-concentric surrounding shape with gaps between the defocusing structures or without gaps as e.g. for those of the type shown in Fig. 1 of WO 2019/206569 A1. In the case of the non-concentric surrounding shape each of the defocusing structures may provide identical focal power. Alternatively, the defocusing structures may distinguish in focal power.

The term "diffusing structure" means any structure providing diffusing properties to the respective area of the spectacle lens. A diffusing structure constitutes an optical element that is made of any material that diffuses or scatters light in some manner to transmit soft light. With particular regard to the present invention said diffusing structure each changes an average transferred contrast for the wearer. Typical diffusing structures are disclosed e.g. in WO 2010/075319 A2 as depressions on the surface of the spectacle lens or as translucent inclusions in a spectacle lens material. The size of such compact structures typically ranges between 0.8 mm and 3mm both along and transverse to said structure line. The spatial extent along and transverse to said structure line may be equal or may differ similar to the defocusing structures.

Moreover, a diffusing structure may comprise a continuous shape such as a concentric or a non-concentric shape. In particular, the diffusing structure may be elongated along said structure line. Such an elongated structure line type diffuser is e.g. disclosed in WO 2022/112534 A1 and called as "contact-line forming a ring-shaped diffuser".

The term "one elongated diffusing structure" refers to at least one elongated diffusing structure. In other words, the term "one elongated diffusing structure" refers to one or more elongated diffusing structures.

The term "transferred contrast" describes in context of the present invention the ratio of the contrast of an image of an object to the contrast of a corresponding object. The term "average transferred contrast" describes in context of the present invention the average transferred contrast of multiple diffusing structures an optical element. If a wearer looks through a clear vision zone having an "average transferred contrast" of 1.0, the wearer will recognize every detail of the observed object. If a wearer looks through a diffusing structure having an "average transferred contrast" of 0.9 the wearer will recognize less details (in this case 90%) of the observed object compared to as he would look through the clear vision zone having an "average transferred contrast" of 1.0. In this example the average transferred contrast is reduced. If a structure line has three different diffusing structures with three different transferred contrasts of 0.2, 0.7 and 0.9, the average transferred contrast of the structure line would be, in context of the present invention, the arithmetic average of the three different transferred contrasts. In this case the average transferred contrast of the structure line would be 0.6.

The term "plurality of compact diffusing structures" refers to a plurality of structures providing diffusing properties to the respective area of the spectacle lens. With particular regard to the present invention said diffusing structure each changes an average transferred contrast for the wearer. Moreover, said plurality of diffusing structures comprise more than one diffusing structure, whereas the plurality of diffusing structures forms a non-concentric surrounding shape with gaps between the diffusing structures.

The term "visual performance indicator" refers to an error of dioptric power of the spectacle lens with the same value. The term "dioptric power" represents a general term and comprises the focal power and the prismatic power of a spectacle lens (DIN ISO 10 13666:2019, section 3.10.13). As generally used, the term "focal power" is a collective term for the spherical vertex power, which brings a paraxial pencil of parallel light to a single focus (and which is usually considered in the prescription by the "sphere" value or, abbreviated, "sph", and the cylindrical vertex power of a spectacle lens, which brings a paraxial pencil of parallel light to two separate line foci mutually at right angles (DIN ISO 13666:2019, section 3.10.2) and which is usually considered in the prescription by the "cylinder" value or, abbreviated, "cyl". The "vertex power" is the reciprocal of the paraxial vertex focal length (DIN ISO 13666:2019, section 3.10.7). The term "prescription" denotes a summary in which the dioptric powers necessary for correcting a diagnosed refractive error are specified in the form of suitable values. In the case of spherical power, the prescription may contain a value "sph" for sphere. In the case of astigmatic power, the prescription can contain values "cyl" for cylinder and "axis" for axis, and, in the case of prismatic power, the prescription can contain prism and base values. Moreover, the prescription may contain further values, for example the "add" value in the case of multifocal spectacle lenses, said "add" value specifying the difference between the vertex power in the near portion of the spectacle lens and in the distance portion of the spectacle lens.

In the present invention the "contour line" represents non-visual lines or non-visual points which are connected by a non-visual line on a surface of a spectacle lens with the same error values of specific dioptric power. The non-visual lines or the connected non-visual points represent an isoline for a certain specific dioptric power error and a certain value.

In the present invention the term "structure line" refers to a non-visual line which is congruent to the contour line, or which comprises a predefined constant distance to a contour line. In other words, said structure line comprises a constant distance to an isoline for a certain specific dioptric power and a certain value. The predefined constant distance comprises a positive or a negative value. In the case of a positive value, the structure line is placed further away from the central point of the lens compared to the equal visual performance indicator and/or the contour line. In other words, the structure line is placed outside the area of the equal visual performance indicator and/or the contour line. In the case of a negative value, the structure line is placed closer to the central point of the lens compared to the equal visual performance indicator and/or contour line.

The term "along" refers to a defined position of a structure out of (i) one elongated defocusing structure or (ii) a plurality of compact defocusing structures or (iii) one elongated diffusing structure or (iv) a plurality of compact diffusing structures on the structure line or another line. The defined position of said structure along the structure line or another line may be defined gravity points of said structure. In other words, the gravity point must be positioned on the structure line with a deviation in the range of ±250 µm. The term "gravity point" refers to the center of gravity of said structure which is placed on the structure line or another line. Alternatively, the geometrical center of said structure may be placed on the structure line or another line. In another alternative, the position where said structure comprises the additional focal power may be placed on the structure line or another line. In other words, the term "along" defines which part of the structure must be placed at the structure line or another line. All other structure parts may be positioned next to the structure line or another line.

The value of the predefined constant distance comprises at least the size of the largest expansion of a defocusing or diffusing structure. If for example three different sizes of defocusing or diffusing structures, e.g. 0.5 mm, 1 mm and 1.5 mm, shall be placed on a structure line, then the minimum value of the predefined constant distance is 1.5 mm. In this way the defocusing or diffusing structures would not cover the visual performance indicator and the visual performance indicator would be still measurable.

The inventive data set enables the manufacturing of a spectacle lens for myopia control with a customized myopia control function based on the dioptric power of the spectacle lens and the prescription for the wearer. Moreover, the position of the myopia retarding structures on the spectacle lens is optimized by using contour lines which already comprise errors in the visual performance. Therefore, a position for the myopia retarding structures is chosen, which otherwise would not have the desired correction function for the wearer as prescribed. Hence, well-balanced myopia control function is achieved.

The problem described in detail above is fully solved by a data set having been described in the foregoing with reference to the first aspect of the invention.

In a particular preferred embodiment, the data set is characterized in that either
- at least one feature being selected of the group consisting of:
   (i) one elongated defocusing structure,
   (ii) a plurality of compact defocusing structures,
   (iii) one elongated diffusing structure, and
   (iv) a plurality of compact diffusing structures
   being arranged on a closed line, or
- said structure line being a closed line.

The term "closed line" defines a line which does not have a definite beginning or a definite end. Said closed line may comprise a non-concentric shape or any other shape which surrounds a certain area.

The inventive data set enables the manufacturing of a spectacle lens for myopia control with a customized myopia control function based on the dioptric power of the spectacle lens and the prescription for the wearer. Moreover, in the case the structure line being a closed line the advantage is that the myopia control function is realized in every possible gaze direction of the wearer.

In a particular preferred embodiment of the inventive data set, the visual performance indicator of the spectacle lens represents at least one being selected of the group consisting of:
- a spherical error,
- a residual astigmatism,
- a RMS blur,
- a visual acuity.

The term "spherical error" refers to the variance of the spherical power of the spectacle lens and the spherical power of the prescription for the wearer. In other words, at every point of the spectacle lens at which the spherical power of the spectacle lens does not correspond to the spherical power of the prescription for the wearer, a spherical error exists. If the prescription contains a spherical power value of 2.0 D and a spherical power value of 2.5 D is measured at a certain position on the lens, then the spherical error at this certain position is equal to 0.5 D.

The term "residual astigmatism" refers to the variance of the astigmatic power of the spectacle lens and the astigmatic power of the prescription for the wearer. In other words, at every point of the spectacle lens at which the astigmatic power of the spectacle lens does not correspond to the astigmatic power of the prescription for the wearer, a residual astigmatism exists. If the prescription contains an astigmatic power value of 2.0 D and a astigmatic value of 2.5 D is measured at a certain position on the lens, then the residual astigmatism at this certain position is equal to 0.5 D.

In a context of the present specification the term "RMS blur" refers to a physiological blur a wearer of the spectacle lens experiences due to squared mean spherical error (SphErr) and the squared mean astigmatic error (AstErr) added together with appropriate weights A, B to reflect the way the human vision integrates such optical errors. One example for calculating the RMS blur is RMS = Sqrt(SphErr² + (AstErr/2)²) with the weights being 1 for the spherical error and ½ for the astigmatic error.

The term "visual acuity" refers to the spatial resolving capacity of the visual system of the wearer. Visual acuity expresses the angular size of the smallest target that can just be resolved by a person, but there are several different ways in which clinicians specify this angular quantity. One way is represented by the Logarithm of the Minimum Angle of Resolution (logMAR)¹⁰. The logarithm of the MAR is the common logarithm of the MAR. When visual acuity is 20/20 (or 6/6), the MAR is equal to 1 minarc, so the log MAR equals logio (1.0) equals 0.0. For 20/40 (or 6/12), the MARis 2 minarc, so logMAR equals log₁₀ (2.0) equals 0.30. When the visual acuity score is better than 20/20 (or 6/6), the logMAR value becomes negative. For example, for 20/16 (or 6/4.8), MAR equals 0.8 minarc and logio (0.8) equals -0.10. For charts that have a size progression ratio of 0.1 log units and five letters per row, each letter can be assigned a value of 0.02 on the logMAR scale. Further exemples of the term "visual acuity" are shown in BORISH'SCLINICAL REFRACTION, SECOND EDITION, 2006, Butterworth-Heinemann, pages 217 to 246.

If the visual performance indicator is represented by a spherical error or a visual acuity, the advantage of this further advantageous embodiment of the data set, is that areas of the spectacle lens that only partially fulfill the requirements of the prescription are the basis for the myopia control function of a single vision spectacle lens or a progressive addition lens. If the visual performance indicator is represented by a residual astigmatism or a RMS blur the advantage of this further advantageous embodiment of the data set, is that areas of the spectacle lens that only partially fulfill the requirements of the prescription are the basis for the myopia control function of a progressive addition lens.

In addition, spectacle lens comprises a customized and well-balanced distribution between the clear vision zone and the defocusing and/or diffusing structures of the lens. Hence, the myopia control function as well as the comfort of wear for the wearer is significantly enhanced.

In a particular preferred embodiment of the inventive data set, the predefined contour line comprises at least one value in one of the ranges selected of the group of ranges consisting of:
- 0.25 D to 5.0 D for a visual performance indicator representing the spherical error,
- 0.50 D to 4.0 D for a visual performance indicator representing the residual astigmatism,
- 0.50 D to 4.0 D for a visual performance indicator representing the residual RMS blur,
- logMAR 0.1 to logMAR 1.0 for a visual performance indicator representing the visual acuity.

The advantage of the ranges for a visual performance indicator as indicated above, is that this ranges enable a spectacle lens with different zones of myopia control functionality. In other words, a low myopia control function as well a high myopia control function can be realized.

In a particular preferred embodiment of the inventive numerical data set, said (i) one elongated defocusing structure and/or said (ii) plurality of compact defocusing structures and/or said (iii) one elongated diffusing structure and/or said (iv) a plurality of compact diffusing structures consisting at least one occupation factor value along said structure line out of the group of:
- 21% to 40% of said structure line (105, 205, 305, 405, 505, 605) for at least one visual performance indicator consisting at least one of the group of:
   ∘ 0.25 D to 2.0 D for a visual performance indicator (101, 601) being the spherical error,
   ∘ 0.50 D to 1.0 D for a visual performance indicator (101, 601) being the residual astigmatism,
   ∘ 0.50 D to 1.0 D for a visual performance indicator (101, 601) being the RMS blur,
   ∘ logMAR 0.1 to logMAR 0.3 for a visual performance indicator (101, 601) being the visual acuity,
- 41% to 60% of said structure line (105, 205, 305, 405, 505, 605) for at least one visual performance indicator consisting at least one of the group of:
   ∘ 2.1 D to 3.0 D for a visual performance indicator (101, 601) being the spherical error,
   ∘ 1.1 D to 2.0 D for a visual performance indicator (101, 601) being the residual astigmatism,
   ∘ 1.10 D to 2.0 D for a visual performance indicator (101, 601) being the RMS blur,
   ∘ logMAR 0.31 to logMAR 0.5 for a visual performance indicator (101, 601) being the visual acuity,
- 61% to 80% of said structure line (105, 205, 305, 405, 505, 605) for at least one visual performance indicator consisting at least one of the group of:
   ∘ 3.1 D to 4.0 D for a visual performance indicator (101, 601) being the spherical error,
   ∘ 2.1 D to 3.0 D for a visual performance indicator (101, 601) being the residual astigmatism,
   ∘ 2.10 D to 3.0 D for a visual performance indicator (101, 601) being the RMS blur,
   ∘ logMAR 0.51 to logMAR 0.7 for a visual performance indicator (101, 601) being the visual acuity,
- 81% to 100% of said structure line (105, 205, 305, 405, 505, 605) for at least one visual performance indicator consisting at least one of the group of:
   ∘ 4.1 D to 5.0 D for a visual performance indicator (101, 601) being the spherical error,
   ∘ 3.1 D to 4.0 D for a visual performance indicator (101, 601) being the residual astigmatism,
   ∘ 3.10 D to 4.0 D for a visual performance indicator (101, 601) being the RMS blur,
   ∘ logMAR 0.71 to logMAR 1.0 for a visual performance indicator (101, 601) being the visual acuity.

The term "occupation factor" refers to a part of the structure line which is covered by defocusing structures and/or diffusing structures. If the structure line has for example a line length of 5 cm and 4 cm of said structure line are covered by defocusing structures and/or diffusing structures, then the structure comprises an occupation factor of 80%.

The advantage of this further advantageous embodiment of the inventive data set is that based on the occupation factor a weighting of the myopia control function can be realized. If an equal visual performance indicator, for example the spherical error, only comprises an error between 0.25 D and 2.0 D, then an occupation factor between 21% to 40% will be used. Hence, the partial correction of the prescription will be obtained and a small myopia function control is induced. If an equal visual performance indicator, for example the spherical error, comprises an error between 4.1 D and 5.0 D, then an occupation factor between 81% to 100% will be used Hence, the correction of the prescription will be suppressed, and a high myopia control function is induced. In addition, the spectacle lens comprises a well-balanced distribution between the clear vision zone and the defocusing and/or diffusing structures of the spectacle lens.

In a particular preferred embodiment of the inventive data set, said (i) one elongated defocusing structure and/or said (ii) plurality of compact defocusing structures and/or said (iii) elongated diffusing structure and/or said (iv) plurality of compact diffusing structures comprising an non-contiguous shape.

The term "non-contiguous shape" refers to a non-permanent and non-connected arrangement of said (i) one elongated defocusing structure and/or said (ii) plurality of compact defocusing structures and/or said (iii) elongated diffusing structure and/or said (iv) plurality of compact diffusing structures. In the case of the (ii) plurality of compact defocusing structures and the (iv) plurality of compact diffusing structures, no single structure may be in contact to the direct adjacent structure. In other words, a separated structure is separated to any other structure according to this particular preferred embodiment.

The advantage of this further advantageous embodiment of the data set is that said spectacle lens comprises structures only at that part of the structure line, which the wearer of the spectacle lens usually looks through. This leads to a myopia control function, which is only generated at parts of the spectacle lens where it is needed. Hence, the number of needed structures is decreased without decreasing the effectivity of the myopia control function.

In a particular preferred embodiment of the inventive numerical data set, said (ii) plurality of compact defocusing structures and/or said (iv) plurality of compact diffusing structures comprising at least one structure distribution function along said structure line being selected of the group consisting of:
- a linear structure distribution function,
- a normal structure distribution function.

The term "structure distribution" refers to said "non-contiguous structure" with a non-permanent and non-connected arrangement of (ii) plurality of compact defocusing structures and/or said (iv) plurality of compact diffusing structures. The "structure distribution" defines how the (ii) plurality of compact defocusing structures and/or said (iv) plurality of compact diffusing structures are distributed along the structure line.

In the case of a "linear structure distribution function" the (ii) plurality of compact defocusing structures and/or said (iv) plurality of compact diffusing structures are distributed with an equal distance to each other. For example: If a structure line has a finite length n and four focusing structures are placed with a "linear structure distribution function" on said structure line, then the distance between the focusing structures is n/4 in the case of a non-closed structure line and n/3 in the case of a closed structure line. The advantage of this further advantageous embodiment of the data set is that based on the linear structure distribution function, an equal myopia control function is realized along the structure line.

In the case of a "normal structure distribution function" the (ii) plurality of compact defocusing structures and/or said (iv) plurality of compact diffusing structures are distributed with a normal distribution to each other. The normal distribution function is also known as a "bell-shaped curve". The average value of the normal distribution function may be placed at every point of the structure line. In an advantages embodiment the average value of the normal distribution function is placed at a point of the structure line where an increased defocus or scattering should be realized. For example: If a non-circular structure line has a finite length n and 10 focusing structures with the average value of the normal distribution function being located at the middle of the non-circular structure line, then the majority of the focusing structures are placed in the middle of the non-circular structure line and a minority is placed at or towards the ends of the non-circular structure line. The advantage of this further advantageous embodiment of the inventive data set is that based on the normal structure distribution function a center point for the myopia control function can be realized. In other words, the myopia control function along the structure line is weighted based on the normal structure distribution function.

In a particular preferred embodiment of the inventive data set, said (i) one elongated defocusing structure and/or said (ii) plurality of compact defocusing structures and/or said (iii) elongated diffusing structure and/or said (iv) plurality of compact diffusing structures are configured to induce at least one of out of the group consisting of:
- 0.25 D to 12.0 D of an additional focal power in the case of said (i) one elongated defocusing structure and/or said (ii) plurality of compact defocusing structures,
- 0.1 to 0.5 of an optical transfer function in the case of said (iii) elongated diffusing structure and/or said (iv) plurality of compact diffusing structures.

The advantage of the additional focal power is that the induced defocus can be adjusted based on the position and the size of the defocusing structure. The advantage of the optical transfer function is that the induced reduced contrast can be adjusted based on the position and the size of the diffusing structures.

A method being configured for manufacturing a spectacle lens for a predefined wearer based on the data set.

In a second aspect, the present invention relates to a method being configured for a computer-implemented calculation of a digital twin of a spectacle lens for a predefined wearer for the purpose of a use of the digital twin for manufacturing the spectacle lens based on a digital twin of an initial spectacle lens being configured for being positioned a in a predefined position of wear according to sec. 3.2.36 of ISO 13666:2019(E) in front of an eye of said predefined wearer, said initial spectacle lens comprising
- a clear vision zone,
- said clear vision zone providing one or a plurality of contour lines along which a visual performance indicator has constant values, whereby said visual performance indicator characterizes a visual performance of said initial spectacle lens within said clear vision zone for said wearer wearing said initial spectacle lens in said predefined position of wear in front of said eye.

The inventive method describes a method step of arranging at least one of the group consisting of (i) one elongated defocusing structure and/or (ii) a plurality of compact defocusing structures and/or (iii) one elongated diffusing structure and/or (iv) a plurality of compact diffusing structures along a structure line corresponding to a predefined contour line out of said one or said plurality of contour lines along which said visual performance indicator has said constant values or along a structure line in a predefined constant distance to said predefined contour line.

The term "digital twin of an initial spectacle lens" refers to the initial data which a lens designer uses before calculating the desired spectacle lens design. In other words, the term "digital twin of an initial spectacle lens" represents the starting point of the computer-implemented method for calculating a digital twin of a spectacle lens.

The problem described in detail above is fully solved by a method as described above with reference to the second aspect of the invention.

The method being further configured for manufacturing said spectacle lens based on said calculated digital twin.

The method for computer-implemented calculation of a digital twin of a spectacle lens for a predefined wearer enables the calculation of a spectacle lens for myopia control with a customized myopia control function based on the dioptric power of the spectacle lens and the prescription for the wearer. Moreover, the spectacle lens comprises a customized and well-balanced distribution between the clear vision zone and the defocusing and/or diffusing structures of the lens. Hence, the myopia control function as well as the comfort of wear for the wearer is significantly enhanced.

A Computer program according to the method for computer-implemented calculation of a digital twin of a spectacle lens comprises instructions which, when the computer program is executed by a computer, cause the computer to carry out the method for computer-implemented calculation of a digital twin of a spectacle lens.

In a third aspect, the present invention relates to a kit comprising a) a spectacle lens being configured for a predefined wearer and b) information comprising a predefined position of wear according to sec. 3.2.36 of ISO 13666:2019(E) of the spectacle lens in front of an eye of the wearer, said a) spectacle lens comprising
- a clear vision zone and
- at least one of the group consisting of (i) one elongated focusing structure and/or (ii) a plurality of compact focusing structures and/or (iii) one elongated diffusing structure and/or (iv) a plurality of compact diffusing structures,

The inventive kit comprises said (a) spectacle lens being defined such that said (i) one elongated focusing structure and/or said (ii) plurality of compact focusing structures and/or said (iii) one elongated diffusing structure or said (iv) plurality of diffusing structures being arranged along a structure line without any point and axis symmetry having a predefined constant distance to a predefined contour line along which a visual performance indicator has a constant value, said visual performance indicator characterizing a visual performance of said spectacle lens within said clear vision zone for said wearer wearing said spectacle lens in said predefined position of wear in front of said eye.

The problem described in detail above is fully solved by a kit described in the foregoing with reference to the third aspect of the invention.

In a further preferred embodiment, the kit is characterized in that said information being stored on computer-readable medium or being embodied as a data signal.

The inventive kit enables the positioning of a spectacle lens in a predefined spectacle frame for the wearer. Said spectacle lens comprises a myopia control with a customized myopia control function based on the dioptric power of the spectacle lens and the prescription for the wearer. Moreover, the spectacle lens comprises a customized and well-balanced distribution between the clear vision zone and the defocusing and/or diffusing structures of the lens. Hence, the myopia control function as well as the comfort of wear for the wearer is significantly enhanced.

The invention will be described exemplarily in the following with reference to the drawings.
Fig. 1 shows a contour plot of a single vision spectacle lens comprising a visual performance indicator, a predefined contour line and a structure line of a data set describing a single vision spectacle lens according to a first embodiment of the present invention.
Fig. 2 shows a contour plot of a single vision spectacle lens comprising one elongated defocusing structure along a structure line of a data set describing a single vision spectacle lens according to a second embodiment of the present invention.
Fig. 3 shows a contour plot of a single vision spectacle lens comprising a plurality of compact defocusing structures along a structure line of a data set describing a single vision spectacle lens according to a third embodiment of the present invention.
Fig. 4 shows a contour plot of a single vision spectacle lens comprising one elongated diffusing structures along a structure line of a data set describing a single vision spectacle lens according to a fourth embodiment of the present invention.
Fig. 5 shows a contour plot of a single vision spectacle lens comprising a plurality of compact diffusing structures along a structure line of a data set describing a single vision spectacle lens according to a fifth embodiment of the present invention.
Fig. 6 shows a contour plot of a progressive addition spectacle lens comprising a visual performance indicator, a predefined contour line, a predefined constant distance, a structure line and a plurality of compact defocusing structures along a structure line of a data set describing a progressive addition lens according to a sixth embodiment of the present invention.

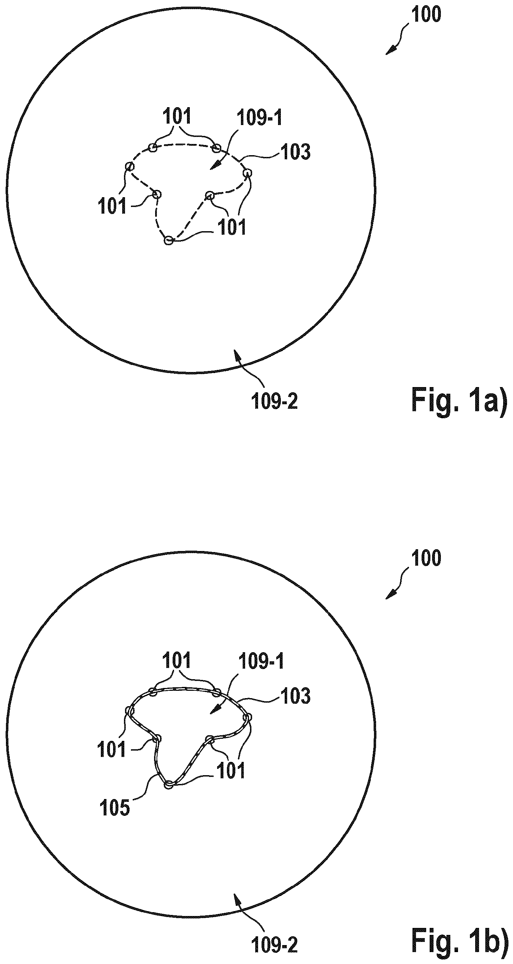

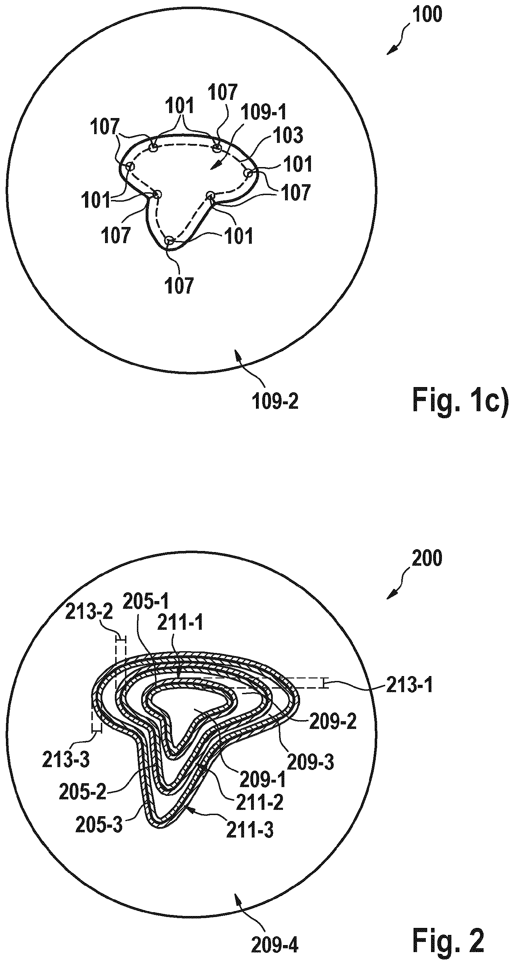

A first exemplary embodiment of the present invention is described with respect to Figure 1. Figure 1 is subdivided into the Figures 1a) to 1c). Figure 1a) shows an example for a visual performance indicator 101 of the data set describing a single vision spectacle lens 100. This first embodiment comprises seven points on the single vision spectacle lens 100 with an equal value for the visual performance indicator 101. In this exemplary embodiment the visual performance indicator 101 is represented by a logMAR plot comprising a constant value of logMAR = 0.9, which corresponds to a remarkable decrease of visual acuity compared to the standard visual acuity of logMAR = 0.0.

Based on said seven points with an equal value for the visual performance indicator 101 a contour line 103, which connects said seven points with an equal value for the visual performance indicator 101, is predefined. In this first exemplary embodiment, the predefined contour line 103 is a closed line. Due to the closed nature of the predefined contour line 103 a first clear vision zone 109-1 is generated inside of the predefined contour line 103 and a second clear vision zone 109-2 is generated outside of the predefined contour line 103.

Figure 1b) which is based on Figure 1a) shows additionally a structure line 105. In this first variant of the first exemplary embodiment, the structure line 105 is congruent to the predefined contour line 103. Hence, there is no predefined constant distance between the predefined contour line 103 and the structure line 105. For displaying reasons, the contour line 103 which is similar to the contour line 103 of Figure 1a) is represented in Figure 1b) by a white dashed line.

Figure 1c) which is based on Figure 1a) shows additionally a structure line 105 and a predefined constant distance 107. In this second variant of the first exemplary embodiment, the structure line 105 is not congruent to the predefined contour line 103. Instead, the structure line 105 comprises a predefined constant distance 107 of +2 mm to the predefined contour line 103. The positive sign of the predefined constant distance 107 implies, that the structure line 105 is arranged outside of the contour line 103. A negative sign of the predefined constant distance 107 would imply, that the structure line 105 is arranged inside of the contour line 103.

A second exemplary embodiment of the present invention is described with respect to Figure 2. Figure 2 shows an example for elongated defocusing structures 211 along structure lines 205 of a data set describing a single vision spectacle lens 200.

In this second embodiment three elongated defocusing structures 211-1, 211-2, 211-3 are arranged along three structure lines 205-1, 205-2, 205-3. In this second exemplary embodiment, the three structure lines 205-1, 205-2, 205-3 are congruent to three predefined contour lines. For displaying reasons, the three predefined contour lines are not shown in Figure 2, but the correlation between the three predefined contour lines to the three structure lines 205-1, 205-2, 205-3 is similar to the example of Figure 1b). Hence, there is no predefined constant distance between the three predefined contour lines and the three structure lines 205-1, 205-2, 205-3.

In this second exemplary embodiment, the three predefined contour lines and the three structure lines 205-1, 205-2, 205-3 are represented by a closed line. Due to the closed nature of the three structure lines 205-1, 205-2, 205-3 three clear vision zones 209-1, 209-2, 209-3 are generated inside of the corresponding three structure lines 205-1, 205-2, 205-3. Additionally, a fourth clear vision zone 209-4 is generated outside of the structure line 205-3.

The three elongated defocusing structures 211-1, 211-2, 211-3 in this second embodiment are non-concentric cylindrical rings. The elongated defocusing structures 211-1, 211-2, 211-3 are arranged along the three closed structure lines 205-1, 205-2, 205-3. The three elongated defocusing structures 211-1, 211-2, 211-3 comprise an additional focal power of 2 D. Hence, due to an elongated defocusing structure 211 a defocus of 2 D is generated along a corresponding structure line 205. Moreover, the three elongated defocusing structures 211-1, 211-2, 211-3 comprise a width 213. In this exemplary embodiment the widths 213-1, 213-2, 213-3 are all equal to 2 mm. In other embodiments the focal power and the width 213 of the elongated defocusing structure 211 can be different for each elongated defocusing structure 211.

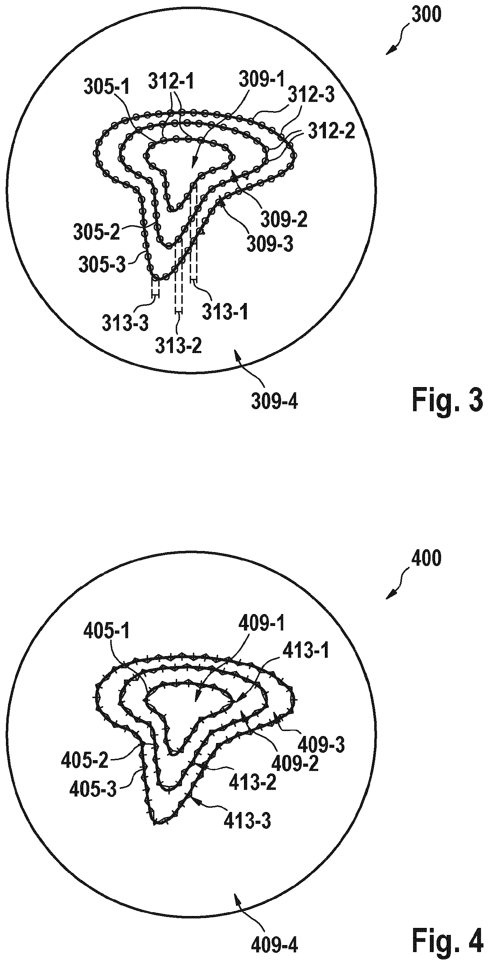

A third exemplary embodiment of the present invention is described with respect to Figure 3. Figure 3 shows an example for a plurality of compact defocusing structures 312 along structure lines 305 of a data set describing a single vision spectacle lens 300.

In this third embodiment the plurality of compact defocusing structures 312-1, 312-2, 312-3 are arranged along three structure lines 305-1, 305-2, 305-3. In this third exemplary embodiment, the three structure lines 305-1, 305-2, 305-3 are congruent to three predefined contour lines. For displaying reasons, the three predefined contour lines are not shown in Figure 3, but the correlation between the three predefined contour lines to the three structure lines 305-1, 305-2, 305-3 is similar to the example of Figure 1b). Hence, there is no predefined constant distance between the three predefined contour lines and the three structure lines 305-1, 305-2, 305-3.

In this third exemplary embodiment, the three predefined contour lines and the three structure lines 305-1, 305-2, 305-3 are represented by a closed line. Due to the closed nature of the three structure lines 305-1, 305-2, 305-3 three clear vision zones 309-1, 309-2, 309-3 are generated inside of the corresponding three structure lines 305-1, 305-2, 305-3. Additionally, a fourth clear vision zone 309-4 is generated outside of the structure line 305-3.

The plurality of compact defocusing structures 312-1, 312-2, 312-3 in this third embodiment are lenslets. These lenslets are arranged along the three closed structure lines 305-1, 305-2, 305-3. The plurality of compact defocusing structures 312-1, 312-2, 312-3 comprise an additional focal power of 3 D. Hence, due to the plurality of compact defocusing structures 312 a plurality of defocus of 3 D is generated along a corresponding structure line 305. Moreover, the plurality of compact defocusing structures 312-1, 312-2, 312-3 comprise a width 313. In this exemplary embodiment the widths 313-1, 313-2, 313-3 are all equal to 1 mm. In other embodiments the focal power and the width 313 of the plurality of compact defocusing structures 312 can be different for each single defocusing structure 312.

The distance between each compact defocusing structure 312 along the structure line 305 is equal to 0.25 mm. In other embodiments the distance between each compact defocusing structure 312 can vary within a corresponding structure line 305 and/or can vary between two or more structure lines 305-1, 305-2, 305-3.

A fourth exemplary embodiment of the present invention is described with respect to Figure 4. Figure 4 shows an example for elongated diffusing structures 413 along structure lines 405 of a data set describing a single vision spectacle lens 400.

In this fourth embodiment three elongated diffusing structures 413-1, 413-2, 413-3 are arranged along three structure lines 405-1, 405-2, 405-3. In this fourth exemplary embodiment, the three structure lines 405-1, 405-2, 405-3 are congruent to three predefined contour lines. For displaying reasons, the three predefined contour lines are not shown in Figure 4, but the correlation between the three predefined contour lines to the three structure lines 405-1, 405-2, 405-3 is similar to the example of Figure 1b). Hence, there is no predefined constant distance between the three predefined contour lines and the three structure lines 405-1, 405-2, 405-3.

In this fourth exemplary embodiment, the three predefined contour lines and the three structure lines 405-1, 405-2, 405-3 are represented by a closed line. Due to the closed nature of the three structure lines 405-1, 405-2, 405-3 three clear vision zones 409-1, 409-2, 409-3 are generated inside of the corresponding three structure lines 405-1, 405-2, 405-3. Additionally, a fourth clear vision zone 409-4 is generated outside of the structure line 405-3.

The three elongated diffusing structures 413-1, 413-2, 413-3 in this fourth embodiment are all made of opal glass and are arranged along the three closed structure lines 405-1, 405-2, 405-3. The three elongated diffusing structures 413-1, 413-2, 413-3 comprise an average transferred contrast of 0.8. Hence, due to an elongated diffusing structure 211 the wearer will recognize less details (in this case 80%) of an observed object compared to as he would look through one of the clear vision zones 409-1, 409-2, 409-3, 409-4. In other embodiments the average transferred contrast of the elongated diffusing structure 413 can be different for each elongated diffusing structure 413.

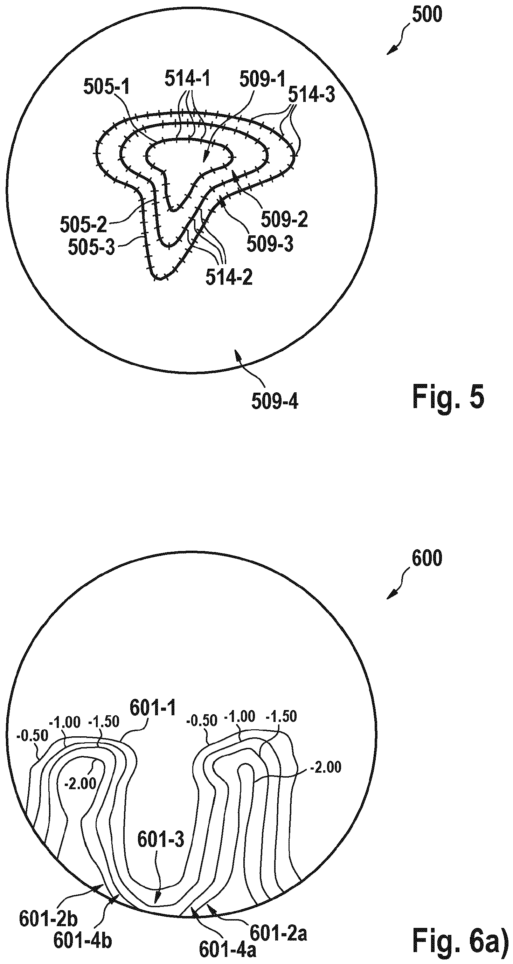

A fifth exemplary embodiment of the present invention is described with respect to Figure 5. Figure 5 shows an example for a plurality of compact diffusing structures 514 along structure lines 505 of a data set describing a single vision spectacle lens 500.

In this fifth embodiment the plurality of compact diffusing structures 514-1, 514-2, 514-3 are made of opal glass and are arranged along three structure lines 505-1, 505-2, 505-3. In this fifth exemplary embodiment, the three structure lines 505-1, 505-2, 505-3 are congruent to three predefined contour lines. For displaying reasons, the three predefined contour lines are not shown in Figure 5, but the correlation between the three predefined contour lines to the three structure lines 505-1, 505-2, 505-3 is similar to the example of Figure 1b). Hence, there is no predefined constant distance between the three predefined contour lines and the three structure lines 505-1, 505-2, 505-3.

In this fifth exemplary embodiment, the three predefined contour lines and the three structure lines 505-1, 505-2, 505-3 are represented by a closed line. Due to the closed nature of the three structure lines 505-1, 505-2, 505-3 three clear vision zones 509-1, 509-2, 509-3 are generated inside of the corresponding three structure lines 505-1, 505-2, 505-3. Additionally, a fourth clear vision zone 509-4 is generated outside of the structure line 505-3.

The plurality of compact diffusing structures 514-1, 514-2, 514-3 are arranged along the three closed structure lines 505-1, 505-2, 505-3. The plurality of compact diffusing structures 514-1, 514-2, 514-3 comprise an average transferred contrast of 0.7. Hence, due to the compact diffusing structure 514 the wearer will recognize less details (in this case 70%) of an observed object compared to as he would look through one of the clear vision zones 509-1, 509-2, 509-3, 509-4. In other embodiments the average transferred contrast of the compact diffusing structure 514 can be different for each compact diffusing structure 514.

The distance between each compact diffusing structure 514 along the structure line 505 is equal to 0.3 mm. In other embodiments the distance between each compact diffusing structure 514 can vary within a corresponding structure line 505 and/or can vary between two or more structure lines 505-1, 505-2, 505-3.

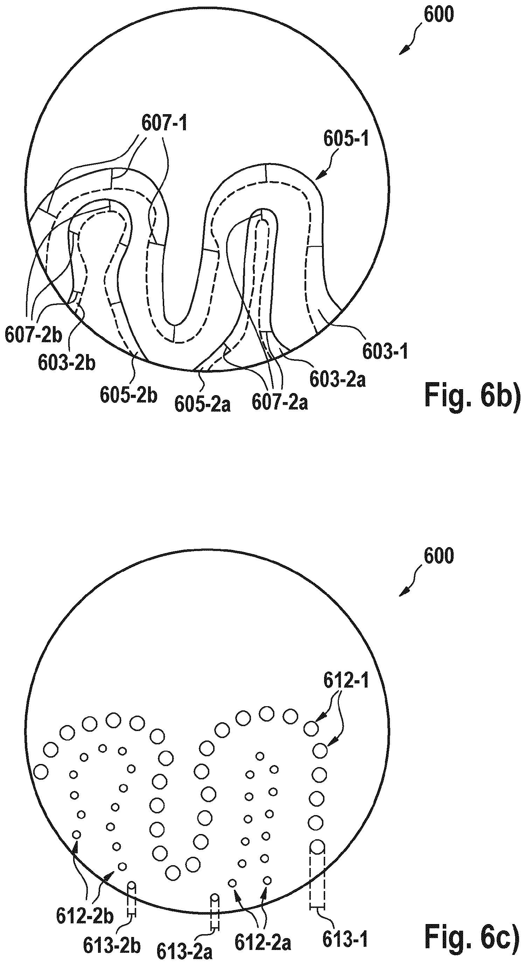

A sixth exemplary embodiment of the present invention is described with respect to Figure 6. Figure 6 is subdivided into the Figures 6a) to 6c). Figure 6a) shows an example for a visual performance indicator 601 of the data set describing a progressive addition lens (PAL) 600. The visual performance indicator 601 In this exemplary embodiment the visual performance indicator 601 is represented by a spherical error of the progressive addition lens 600. The progressive addition lens 600 has four different values for the visual performance indicator 601.

The visual performance indicator 601-1 has a constant spherical error of-0.5 D. The visual performance indicator 601-2a and 601-2b have a constant spherical error of-2.0 D. The visual performance indicator 601-3 has a constant spherical error of-1.0 D. The visual performance indicator 601-4a and 601-4b have a constant spherical error of -1.5 D.

Based on the visual performance indicators 601 corresponding predefined contour lines 603 has an equal value for the visual performance indicator 601, are predefined. Figure 6b) which is based on Figure 6a) shows two examples for the predefined contour lines 603. The predefined contour line 603-1 represents the visual performance indicator 601-1 having a constant spherical error of -0.5 D. The predefined contour lines 603-2a and 603-2b represent the visual performance indicator 601-2a respectively 601-2b having a constant spherical error of -2.0 D.

Figure 6b) shows additionally the structure lines 605-1, 605-2a, 605-2b. In this sixth exemplary embodiment, the structure lines 605-1, 605-2a, 605-2b are not congruent to the corresponding predefined contour lines 603-1, 603-2a, 603-2b. Hence, there is a predefined constant distance 607 between the predefined contour lines 603 and the structure lines 605 is available.

In the case of the predefined contour line 603-1 a predefined constant distance 607-1 has a value of + 3 mm leads to the structure line 605-1. The positive sign of the predefined constant distance 607 implies, that the structure line 605-1 is arranged above the predefined contour line 603-1. A negative sign of the predefined constant distance 607 would lead to structure line 605-1, which is arranged under the contour line 603-1.

In the case of the predefined contour lines 603-2a and 603-2b the predefined constant distances 607-2a and 607-2b - have a value of + 1 mm - lead to the structure lines 605-2a and 605-2b. The positive sign of the predefined constant distances 607-2a and 607-2b implies, that the structure lines 605-2a and 605-2b are arranged above the predefined contour lines 603-2a and 603-2b. A negative sign of the predefined constant distances 607-2a and 607-2b would lead to structure lines 605-2a and 605-2b, which are arranged under the contour lines 603-2a and 603-2b.

Figure 6c) which is based on Figure 6b) shows a plurality of compact defocusing structures 612-1, 612-2 represented by lenslets with a circular shape.

The plurality of compact defocusing structures 612-1 are arranged along the structure line 605-1 (Figure 6b)). The plurality of compact defocusing structures 612-1 have an additional focal power of 2.5 D. Hence, due to the plurality of compact defocusing structures 612-1 a plurality of defocus of 2.5 D is generated along the corresponding structure line 605-1. Moreover, the plurality of compact defocusing structures 612-1 have a width 613-1. In this exemplary embodiment all compact defocusing structures within the plurality of compact defocusing structures 612-1 have the width 613-1 equal to 2 mm. In other embodiments the focal power and the width 613-1 of the plurality of compact defocusing structures 612 can be different for each single defocusing structure within the plurality of compact defocusing structures 612.

The plurality of compact defocusing structures 612-2a, 612-2b are arranged along the disconnected structure lines 605-2a and 605-2b (Figure 6b)). The plurality of compact defocusing structures 612-2a, 612-2b have an additional focal power of 1.0 D. Hence, due to the plurality of compact defocusing structures 612-2a, 612-2b a plurality of defocus of 1.0 D is generated along the corresponding structure lines 605-2a and 605-2b. Moreover, the plurality of compact defocusing structures 612-2a, 612-2b have a width 613-2a, 613-2b. In this exemplary embodiment all compact defocusing structures within the plurality of compact defocusing structures 612-2a or 612-2b have the width 613-2a or 613-2b equal to 1 mm. In other embodiments the focal power and the width 613-2a, 613,2b of the plurality of compact defocusing structures 612-2a, 612-2b can be different for each single defocusing structure within the plurality of compact defocusing structures 612-2a, 612-2b.

## Claims

1. A data set stored on a computer-readable medium or being embodied in the form of a computer-readable data signal comprising at least one kind of the following kinds of data:
a. a digital twin of a spectacle lens (100, 200, 300, 400, 500, 600) being configured for the purpose of use for manufacturing said spectacle lens (100, 200, 300, 400, 500, 600), or
b. data containing computer-readable instructions for controlling one or more manufacturing machines to manufacture said spectacle lens (100, 200, 300, 400, 500, 600),
said spectacle lens (100, 200, 300, 400, 500, 600) being configured for positioning in a predefined position of wear according to sec. 3.2.36 of ISO 13666:2019(E) in front of an eye of a predefined wearer, said spectacle lens (100, 200, 300, 400, 500, 600) comprising:
- a clear vision zone (109, 209, 309, 409, 509);
- at least one of the group consisting of
(i) one elongated defocusing structure (211),
(ii) a plurality of compact defocusing structures (312, 612),
(iii) one elongated diffusing structure (413) and
(iv) a plurality of compact diffusing structures (514)
**characterized in that**
said (i) one elongated defocusing structure (211) and/or said (ii) plurality of compact defocusing structures (312, 612) and/or said (iii) elongated diffusing structure (413) and/or said (iv) plurality of compact diffusing structures (514) being arranged along a structure line (105, 205, 305, 405, 505, 605) without any point and axis symmetry and corresponding to a predefined contour line (103, 603) along which a visual performance indicator (101, 601) has a constant value, said visual performance indicator (101, 601) characterizing a visual performance of said spectacle lens (100, 200, 300, 400, 500, 600) within said clear vision zone (109, 209, 309, 409, 509) for said wearer wearing said spectacle lens (100, 200, 300, 400, 500, 600) in said predefined position of wear in front of said eye or being arranged along a structure line (105, 205, 305, 405, 505, 605) having a predefined constant distance (107, 607) to said predefined contour line (103, 603) along which a visual performance indicator (101, 601) has a constant value, wherein
a spatial extent of said elongated defocusing structure (211) along said structure line (105, 205, 305, 405, 505, 605) exceeds a spatial extent transverse said structure line (105, 205, 305, 405, 505, 605) by at least 2,
a ratio between a spatial extent of each of said compact defocusing structures (312, 612) along said structure line (105, 205, 305, 405, 505, 605) and a spatial extent transverse to said structure line (105, 205, 305, 405, 505, 605) is less than 2,
a spatial extent of said elongated diffusing structure (413) along said structure line (105, 205, 305, 405, 505, 605) exceeds a spatial extent transverse said structure line (105, 205, 305, 405, 505, 605) by at least 5,
a ratio between a spatial extent of each of said compact defocusing structures (514) along said structure line (105, 205, 305, 405, 505, 605) and a spatial extent transverse to said structure line (105, 205, 305, 405, 505, 605) is less than 2.

2. The data set according to claim 1, **characterized in that** either
- at least one feature being selected of the group consisting of:
(i) one elongated defocusing structure (211),
(ii) a plurality of compact defocusing structures (312, 612).
(iii) one elongated diffusing structure (413) and
(iv) a plurality of compact diffusing structures (514)
being arranged on a closed line, or
- said structure line (105, 205, 305, 405, 505, 605) being a closed line.

3. The data set as claimed in the preceding claim, **characterized in that** the visual performance indicator (101, 601) is represents at at least one of being selected of the group consisting of:
- a spherical error,
- a residual astigmatism,
- a RMS blur,
- a visual acuity.

4. The data set as claimed in claim 3, **characterized in that** the predefined contour line (103, 603) comprises at least one value in one of the ranges selected of the group of ranges consisting of:
- 0.25 D to 5.0 D for a visual performance indicator (101, 601) being the spherical error,
- 0.50 D to 4.0 D for a visual performance indicator (101, 601) being the residual astigmatism,
- 0.50 D to 4.0 D for a visual performance indicator (101, 601) being the RMS blur,
- logMAR 0.1 to logMAR 1.0 for a visual performance indicator (101, 601) being the visual acuity.

5. The data set as claimed in claim 4, **characterized in that** said (i) one elongated defocusing structure (211) and/or said (ii) plurality of compact defocusing structures (312, 612) and/or said (iii) one elongated diffusing structure (413) and/or said (iv) a plurality of compact diffusing structures (514) consisting at least one occupation factor along said structure line (105, 205, 305, 405, 505, 605) out of the group of:
- 21% to 40% of said structure line (105, 205, 305, 405, 505, 605) for at least one visual performance indicator consisting at least one of the group of:
• 0.25 D to 2.0 D for a visual performance indicator (101, 601) being the spherical error,
• 0.50 D to 1.0 D for a visual performance indicator (101, 601) being the residual astigmatism,
• 0.50 D to 1.0 D for a visual performance indicator (101, 601) being the RMS blur,
• logMAR 0.1 to logMAR 0.3 for a visual performance indicator (101, 601) being the visual acuity,
- 41% to 60% of said structure line (105, 205, 305, 405, 505, 605) for at least one visual performance indicator consisting at least one of the group of:
• 2.1 D to 3.0 D for a visual performance indicator (101, 601) being the spherical error,
• 1.1 D to 2.0 D for a visual performance indicator (101, 601) being the residual astigmatism,
• 1.10 D to 2.0 D for a visual performance indicator (101, 601) being the RMS blur,
• logMAR 0.31 to logMAR 0.5 for a visual performance indicator (101, 601) being the visual acuity,
- 61% to 80% of said structure line (105, 205, 305, 405, 505, 605) for at least one visual performance indicator consisting at least one of the group of:
• 3.1 D to 4.0 D for a visual performance indicator (101, 601) being the spherical error,
• 2.1 D to 3.0 D for a visual performance indicator (101, 601) being the residual astigmatism,
• 2.10 D to 3.0 D for a visual performance indicator (101, 601) being the RMS blur,
• logMAR 0.51 to logMAR 0.7 for a visual performance indicator (101, 601) being the visual acuity,
- 81% to 100% of said structure line (105, 205, 305, 405, 505, 605) for at least one visual performance indicator consisting at least one of the group of:
• 4.1 D to 5.0 D for a visual performance indicator (101, 601) being the spherical error,
• 3.1 D to 4.0 D for a visual performance indicator (101, 601) being the residual astigmatism,
• 3.10 D to 4.0 D for a visual performance indicator (101, 601) being the RMS blur,
• logMAR 0.71 to logMAR 1.0 for a visual performance indicator (101, 601) being the visual acuity.

6. The data set as claimed in one of the preceding claims, **characterized in that** said (i) one elongated defocusing structure (211) and/or said (ii) plurality of compact defocusing structures (312, 612) and/or said (iii) elongated diffusing structure (413) and/or said (iv) plurality of compact diffusing structures (514) comprising a non-contiguous shape.

7. The data set as claimed in the two preceding claims, **characterized in that** said (ii) plurality of compact defocusing structures (312, 612) and/or said (iv) plurality of compact diffusing structures (514) comprising at least one structure distribution function along said structure line (105, 205, 305, 405, 505, 605) being selected of the group consisting of:
- a linear structure distribution function,
- a normal structure distribution function.

8. The data set as claimed in one of the preceding claims, **characterized in that** said (i) one elongated defocusing structure (211) and/or said (ii) plurality of compact defocusing structures (312, 612) and/or said (iii) elongated diffusing structure (413) and/or said (iv) plurality of compact diffusing structures (514) are configured to induce at least one of out of the group consisting of:
- 0.25 D to 12.0 D of an additional focal power in the case of said (i) one elongated defocusing structure (211) and/or said (ii) plurality of compact defocusing structures (312, 612),
- 0.1 to 0.5 of an optical transfer function in the case of said (iii) elongated diffusing structure (413) and/or said (iv) plurality of compact diffusing structures (514).

9. A method being configured for manufacturing a spectacle lens (100, 200, 300, 400, 500, 600) for a predefined wearer based on the data set according to one of the preceding claims.

10. A method being configured for a computer-implemented calculation of a digital twin of a spectacle lens (100, 200, 300, 400, 500, 600) for a predefined wearer for the purpose of a use of the digital twin for manufacturing the spectacle lens (100, 200, 300, 400, 500, 600) based on a digital twin of an initial spectacle lens (100, 200, 300, 400, 500, 600) being configured for being positioned a in a predefined position of wear according to sec. 3.2.36 of ISO 13666:2019(E) in front of an eye of said predefined wearer, said initial spectacle lens (100, 200, 300, 400, 500, 600) comprising
- a clear vision zone (109, 209, 309, 409, 509),
- said clear vision zone (109, 209, 309, 409, 509) providing one or a plurality of contour lines (103, 603) along which a visual performance indicator (101, 601) has constant values, whereby said visual performance indicator (101, 601) characterizes a visual performance of said initial spectacle lens (100, 200, 300, 400, 500, 600) within said clear vision zone (109, 209, 309, 409, 509) for said wearer wearing said initial spectacle lens (100, 200, 300, 400, 500, 600) in said predefined position of wear in front of said eye.
**characterized in**
arranging at least one of the group consisting of (i) one elongated defocusing structure (211), (ii) a plurality of compact defocusing structures (312, 612), (iii) one elongated diffusing structure (413) and (iv) a plurality of compact diffusing structures (514), along a structure line (105, 205, 305, 405, 505, 605) corresponding to a predefined contour line (103, 603) out of said one or said plurality of contour lines (103, 603) along which said visual performance indicator (101, 601) has said constant values or along a structure line (105, 205, 305, 405, 505, 605) in a predefined constant distance (107, 607) to said predefined contour line (103, 603), wherein
a spatial extent of said elongated defocusing structure (211) along said structure line (105, 205, 305, 405, 505, 605) exceeds a spatial extent transverse said structure line (105, 205, 305, 405, 505, 605) by at least 2,
a ratio between a spatial extent of each of said compact defocusing structures (312, 612) along said structure line (105, 205, 305, 405, 505, 605) and a spatial extent transverse to said structure line (105, 205, 305, 405, 505, 605) is less than 2,
a spatial extent of said elongated diffusing structure (413) along said structure line (105, 205, 305, 405, 505, 605) exceeds a spatial extent transverse said structure line (105, 205, 305, 405, 505, 605) by at least 5,
a ratio between a spatial extent of each of said compact defocusing structures (514) along said structure line (105, 205, 305, 405, 505, 605) and a spatial extent transverse to said structure line (105, 205, 305, 405, 505, 605) is less than 2.

11. The method according to claim 10 being further configured for manufacturing said spectacle lens (100, 200, 300, 400, 500, 600) based on said calculated digital twin.

12. A Computer program according to one of the claims 10, **characterized in that** comprising instructions which, when the computer program is executed by a computer, cause the computer to carry out the method of claim 10.

13. A kit comprising a) a spectacle lens (100, 200, 300, 400, 500, 600) being configured for a predefined wearer and b) information comprising a predefined position of wear according to sec. 3.2.36 of ISO 13666:2019(E) of the spectacle lens (100, 200, 300, 400, 500, 600) in front of an eye of the wearer, said a) spectacle lens (100, 200, 300, 400, 500, 600) comprising
- a clear vision zone (109, 209, 309, 409, 509) and
- at least one out of the group consisting of (i) one elongated focusing structure (211), (ii) a plurality of compact focusing structures (312, 612), (iii) one elongated diffusing structure (413) and (iv) a plurality of compact diffusing structures (514),
**characterized in that**
said (i) one elongated focusing structure (211) and/or said (ii) plurality of compact focusing structures (312, 612) and/or said (iii) one elongated diffusing structure (413) or said (iv) plurality of diffusing structures (514) being arranged along a structure line (105, 205, 305, 405, 505, 605) without any point and axis symmetry having a predefined constant distance (107, 607) to a predefined contour line (103, 603) along which a visual performance indicator (101, 601) has a constant value, said visual performance indicator (101, 601) characterizing a visual performance of said spectacle lens (100, 200, 300, 400, 500, 600) within said clear vision zone (109, 209, 309, 409, 509) for said wearer wearing said spectacle lens (100, 200, 300, 400, 500, 600) in said predefined position of wear in front of said eye, wherein
a spatial extent of said elongated defocusing structure (211) along said structure line (105, 205, 305, 405, 505, 605) exceeds a spatial extent transverse said structure line (105, 205, 305, 405, 505, 605) by at least 2,
a ratio between a spatial extent of each of said compact defocusing structures (312, 612) along said structure line (105, 205, 305, 405, 505, 605) and a spatial extent transverse to said structure line (105, 205, 305, 405, 505, 605) is less than 2,
a spatial extent of said elongated diffusing structure (413) along said structure line (105, 205, 305, 405, 505, 605) exceeds a spatial extent transverse said structure line (105, 205, 305, 405, 505, 605) by at least 5,
a ratio between a spatial extent of each of said compact defocusing structures (514) along said structure line (105, 205, 305, 405, 505, 605) and a spatial extent transverse to said structure line (105, 205, 305, 405, 505, 605) is less than 2.

14. The kit according to claim 13, **characterized in that** said information being stored on computer-readable medium or being embodied as a data signal.
